# EUROPÄISCHE PATENTSCHRIFT

(11) **EP 2 477 851 B1**
(45) Veröffentlichungstag und Bekanntmachung des Hinweises auf die Patenterteilung: **06.07.2016**
(21) Anmeldenummer: 10737540.4
(22) Anmeldetag: 22.07.2010
(51) Int. Cl.: B60S 1/08

(54) **ANTRIEBSSTEUERUNG**
DRIVE CONTROLLER
CONTROLEUR DE COMMANDE

(30) Priorität: 15.09.2009 DE 102009029457
(43) Veröffentlichungstag der Anmeldung: 25.07.2012
(73) Patentinhaber: Robert Bosch GmbH, 70442 Stuttgart (DE)
(72) Erfinder: PRSKAWETZ, Philipp, 76467 Bietigheim (DE); TISCH, Florian, 77871 Renchen-Ulm (DE); FABING, Edgard, F-57410 Bining (FR)
(86) Internationale Anmeldenummer: PCT/EP2010/060595
(87) Internationale Veröffentlichungsnummer: WO 2011/032756

(56) Entgegenhaltungen:
- EP-A2- 1 447 287
- EP-A2- 1 447 288

## Beschreibung

Die Erfindung betrifft ein Steuersystem. Insbesondere betrifft die Erfindung ein Steuersystem mit einer Antriebssteuerung zur Steuerung eines Scheibenwischerantriebs eines Kraftfahrzeugs.

Kraftfahrzeuge verfügen über Scheibenwischer, um Sichtscheiben des Kraftfahrzeugs von Nässe und Verschmutzung zu befreien. Ein Scheibenwischer umfasst einen Antrieb, einen Wischerarm und ein Wischerblatt. Der Antrieb überträgt eine oszillierende Bewegung auf den Wischerarm, der das Wischerblatt über die Sichtscheibe führt. Windschutzscheiben von Personenkraftwagen verfügen üblicherweise über zwei nebeneinander liegende Scheibenwischer. Um eine mechanische Verbindung zwischen den Wischarmen beider Scheibenwischer zu vermeiden, kann jeder Scheibenwischer über einen eigenen, ihm zugeordneten Antrieb verfügen, wobei die Antriebe synchronisiert sind, um eine Kollision der Wischerarme bzw. Wischerblätter zu vermeiden und um eine vorbestimmte Bewegungsabfolge der Scheibenwischer einzuhalten. Jeder der Antriebe weist eine ihm zugeordnete Steuerung auf. Je nach Konfiguration der gesamten Scheibenwischer-Anlage definiert eine der Steuerungen in der Rolle des "Master" die zu vollführende Bewegung beider Wischarme und übermittelt von ihr bestimmte Bewegungsinformationen an die andere Steuerung, die in der Rolle des "Slave" dieser Führung folgt. Beide Steuerungen steuern darüber hinaus die ihnen zugeordneten Antriebe.

EP 1 447 288 A2 zeigt eine Wischeranlage für ein Kraftfahrzeug, die zwei Wischermodule mit Steuerungen umfasst, die jeweils über eine erste und eine zweite Schnittstelle verfügen. Die zweiten Schnittstellen sind miteinander verbunden und die ersten Schnittstellen sind mit einem Fahrzeug-Steuergerät verbunden. Mittels eines externen Diagnosegeräts können über das Fahrzeug-Steuergerät fahrzeugspezifische Informationen an die Steuerungen der Wischermodule ausgegeben werden. Auf der Basis der empfangenen Informationen und abgespeicherten Informationen über ihre jeweilige Getriebelage konfiguriert sich daraufhin eines der Wischermodule in einer Master-Konfiguration und das andere in einer Slave-Konfiguration.

Der Erfindung liegt die Aufgabe zugrunde, eine Antriebssteuerung bereitzustellen, die eine dynamische Zuordnung der Rollen in einer Zwei-Wischer-Anlage erlaubt.

### Offenbarung der Erfindung

Die Erfindung löst diese Aufgabe durch ein Steuersystem mit den Merkmalen nach Anspruch 1 und ein Verfahren mit den Merkmalen nach Anspruch 7. Unteransprüche geben Ausgestaltungen bzw. Ausführungsformen an.

Ein erfindungsgemäßes Steuersystem für zwei Scheibenwischer eines Kraftfahrzeugs umfasst eine ersten Antriebssteuerung mit einer ersten und einer zweiten Schnittstelle, einen der ersten Antriebssteuerung zugeordneten ersten Antrieb, eine zweite Antriebssteuerung mit einer ersten und einer zweiten Schnittstelle und einen der zweiten Antriebssteuerung zugeordneten zweiten Antrieb. Dabei sind die zweiten Schnittstellen beider Antriebssteuerungen miteinander verbunden, die erste Schnittstelle der ersten Antriebssteuerung ist mit einem Steuermodul verbunden und die erste Schnittstelle der zweiten Antriebssteuerung ist mit keinem Kommunikationspartner verbunden. Beide Antriebssteuerungen sind dazu eingerichtet, sich nach Empfangen von Steuerinformationen über die erste Schnittstelle in einer Master-Rolle zu konfigurieren und Steuerinformationen über die zweite Schnittstelle auszugeben, um die jeweils andere Antriebssteuerung zu steuern.
Zur Ausrüstung oder Versorgung eines Kraftfahrzeugs mit Scheibenwischersystemen oder Ersatzteilen ist es somit nicht mehr erforderlich, zwischen unterschiedlichen Antriebssteuerungen zu differenzieren. Somit können Verwaltungs-, Lager- und Produktionskosten eingespart werden. Darüber hinaus ist es einfach möglich, eine bestehende Verteilung der Master- bzw. Slave-Rollen auf zwei Antriebssteuerungen zu ändern, indem die Verbindung des Steuermoduls mit der ersten Schnittstelle einer der Antriebssteuerungen gelöst und stattdessen mit der ersten Schnittstelle der anderen Antriebssteuerung verbunden wird.

Jede der Antriebssteuerungen kann sich als Slave konfigurieren, falls über eine vorbestimmte Zeitdauer hinweg keine Steuerinformationen über die erste Schnittstelle empfangen werden konnten. Dadurch ist eine Konfiguration mehrerer Antriebssteuerungen als Master in einem System, was zu Betriebsstörungen führen kann, unwahrscheinlich. Die Konfiguration als Master oder als Slave kann reversibel sein, indem parallel zu einer Operation in der entsprechenden Rolle Steuerinformationen über die erste Schnittstelle empfangen werden, die gegebenenfalls eine Neukonfiguration der Antriebssteuerung auslösen. Dies erhöht eine Konfigurationsgeschwindigkeit und sorgt für eine verbesserte Handhabbarkeit der Antriebssteuerung.

Die Antriebssteuerung als Master konfigurierte Antriebssteuerung kann konfiguriert sein, über die zweite Schnittstelle Steuerinformationen auszutauschen, die eine Sollstellung und eine Iststellung eines Antriebs umfassen, der mit der anderen Antriebssteuerung verbunden ist. Dabei kann die als Master konfigurierte Antriebssteuerung eine Sollstellung übermitteln und eine Iststellung empfangen. Mit diesen Informationen kann beispielsweise eine Kollisionserkennung durchgeführt werden, wenn einer der Wischarme gegen einen Widerstand läuft und mit verminderter Geschwindigkeit weiterläuft oder anhält. Die als Master konfigurierte Antriebssteuerung kann eine solche Kollision auflösen, indem sie einen oder beide der Antriebe in einer vorbestimmten Reihenfolge und Geschwindigkeit in einer passenden Richtung laufen lässt.

Die Antriebsteuerungen können jeweils auf wenigstens zwei gespeicherte Kennlinien zugreifen und in einer Konfiguration als Master den Antrieb entsprechend einer ersten Kennlinie und in einer Konfiguration als Slave entsprechend einer zweiten Kennlinie steuern. Die Kennlinien definieren einen zeitlichen Ablauf einer Bewegung des Antriebs bzw. des Wischarms. Ein charakteristischer Bewegungsablauf eines mit der Antriebssteuerung verbundenen Antriebs kann somit unterschiedlich sein, je nachdem, ob die Antriebssteuerung als Master oder als Slave konfiguriert ist. Dies erlaubt es, durch Umkonfigurierung der Master- und Slave-Rollen ein Zusammenspiel im Bewegungsablauf der Antriebe zu verändern. Außerdem wird durch die lokale Verarbeitung von Kennlinien ein Kommunikationsaufwand zwischen zwei Antriebssteuerungen minimiert.

Die Antriebssteuerungen können dazu eingerichtet sein, sich im Zweifelsfall als Slave zu konfigurieren, etwa nach Empfangen von Steuerinformationen sowohl über die erste als auch über die zweite Schnittstelle. Dadurch können mechanische und Datenkollisionen vermieden werden, wenn beide Antriebssteuerungen versuchen, die Master-Rolle einzunehmen.

Empfängt eine der Antriebssteuerungen über eine vorbestimmte Zeitdauer keine Steuerinformationen über eine ihrer Schnittstellen, so kann sie einen ihr zugeordneten Antrieb in eine Parkposition verbringen. Im Fehlerfall kann so vermieden werden, dass der Antrieb in einer Position verbleibt, wo er eine Betriebssicherheit des Kraftfahrzeugs stört oder ein potentielles Hindernis für den zweiten Antrieb darstellt.

Nach einem weiteren Aspekt umfasst die Erfindung ein Verfahren zur Steuerung zweier Antriebe, denen jeweils eine Antriebssteuerung zugeordnet ist. Eine erste Antriebssteuerung empfängt Steuerinformationen über eine erste Schnittstelle und gibt daraufhin über ihre zweite Schnittstelle Steuerinformationen an eine zweite Antriebssteuerung aus. Jede Antriebssteuerung steuert einen ihr zugeordneten Antrieb.

Die Erfindung wird nun mit Bezug auf die beigefügten Figuren näher erläutert, in denen:
Figur 1 ein Steuersystem für Scheibenwischer eines Kraftfahrzeugs;
Figuren 2a und 2b Scheibenwischer-Anordnungen zur Betätigung mittels des Steuersystems aus Figur 1;
Figur 3 ein Kennlinien-Diagramm mit Wischkennlinien der Antriebe des Steuersystems aus Figur 1; und
Figur 4 ein Verfahren zum Steuern des Steuersystems aus Figur 1
   darstellt.

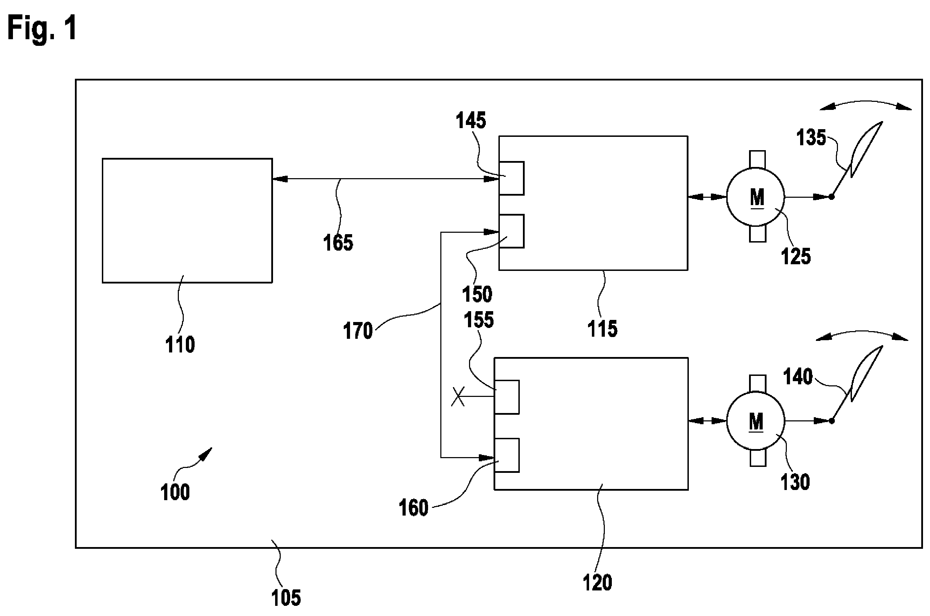

Figur 1 zeigt ein Steuersystem 100 für Scheibenwischer in einem Kraftfahrzeug 105. Das Steuersystem 100 umfasst ein Steuermodul 110, eine erste Antriebssteuerung 115 und eine zweite Antriebssteuerung 120. Der ersten Antriebssteuerung 115 ist ein erster Antrieb 125 und der zweiten Antriebssteuerung 120 ein zweiter Antrieb 130 zugeordnet. Der erste Antrieb 125 betätigt einen ersten Wischarm 135 und der zweite Antrieb 130 betätigt einen zweiten Wischarm 140. Die erste Antriebsteuerung 115 umfasst eine erste Schnittstelle 145 und eine zweite Schnittstelle 150. Die zweite Antriebssteuerung 120 umfasst eine erste Schnittstelle 155 und eine zweite Schnittstelle 160. Mittels einer ersten Verbindung 165 ist das Steuermodul 110 mit einer ersten Schnittstelle 145 der ersten Antriebssteuerung 115 verbunden. Eine zweite Verbindung 170 verläuft von der zweiten Schnittstelle 150 der ersten Antriebssteuerung 115 zur zweiten Schnittstelle 160 der zweiten Antriebssteuerung 120.

Das Steuermodul 110 ist ein Teil einer elektrischen Anlage des Kraftfahrzeugs 105 und kommuniziert in regelmäßigen Abständen mit der ersten Antriebssteuerung 115. Dabei werden Informationen ausgetauscht, unabhängig davon, welchen Betriebszustand der erste Antrieb 125 und der zweite Antrieb 130 einnehmen. Die ausgetauschten Informationen können Konfigurations-, Status- und Betriebsparameter umfassen. Die erste Verbindung 165 kann Teil eines LIN-Bus sein. Anhand von dem Steuermodul 110 über die erste Schnittstelle 145 übermittelter Informationen, beispielsweise Steuerinformationen, erkennt die erste Antriebssteuerung 115, dass sie als Master konfiguriert sein soll. Die erste Antriebssteuerung 115 steuert daraufhin den ihr zugeordneten Antrieb 125 entsprechend den Informationen, die sie über ihre erste Schnittstelle 145 empfängt und sendet korrespondierende Informationen über ihre zweite Schnittstelle 150 und die zweite Verbindung 170 zur zweiten Schnittstelle 160 der zweiten Antriebssteuerung 120. Die zweite Antriebssteuerung 120, deren erste Schnittstelle 155 mit keinem Kommunikationspartner verbunden ist, erkennt am Ausbleiben von Informationen über ihre erste Schnittstelle 155, dass sie sich als Slave konfigurieren soll. Daraufhin wertet sie über ihre zweite Schnittstelle 160 empfangene Informationen aus und steuert den ihr zugeordneten Antrieb 130 entsprechend der empfangenen Informationen. Die zweite Verbindung 170 kann beispielsweise eine Carline-Verbindung sein.

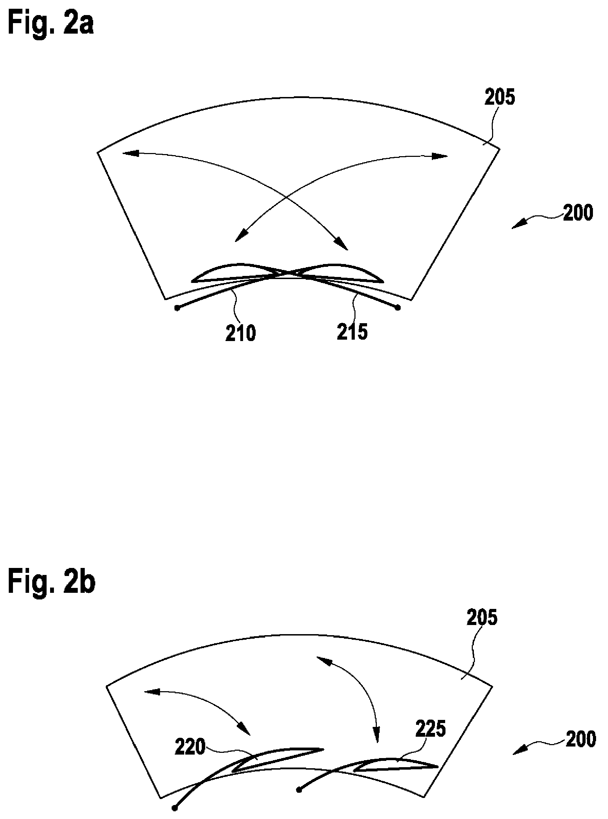

Die Antriebe 125 und 130 sind Gleichstrommotoren, die mittels eines Getriebes auf die Wischarme 135 bzw. 140 wirken. An den Antrieben oder an den Getrieben sind Sensoren (nicht dargestellt) angebracht, um eine tatsächliche Bewegung oder eine absolute Position der Wischarme 135 bzw. 140 zu bestimmen. Die Antriebssteuerungen 115 und 120 sind mit diesen Sensoren verbunden und steuern die Antriebe 125 bzw. 130 in Abhängigkeit der von den Sensoren und der über die Schnittstellen 145 bzw. 160 empfangenen Informationen an. Zur Wahl einer Drehrichtung der Antriebe 125 und 130 umfassen die Antriebssteuerungen 115 und 120 jeweils H-Brücken (nicht dargestellt). Die Antriebssteuerungen 115 und 120 können in die Antriebe 125 bzw. 130 integriert ausgeführt sein. Figuren 2a und 2b zeigen zwei unterschiedliche Scheibenwischer-Anordnungen 200 eines Kraftfahrzeugs 105 zur Steuerung mittels des Steuersystems 100 aus Figur 1. Die stilisierten Ansichten der Figuren 2 und 2a ergeben sich aus einem Inneren des Kraftfahrzeugs 105. Die Scheibenwischer-Anordnung 200 umfasst jeweils eine Windschutzscheibe 205 des Kraftfahrzeugs 105 und jeweils zwei Scheibenwischer 210 - 225. Jeder Scheibenwischer 210 - 225 umfasst jeweils einen Antrieb wie die Antriebe 125, 130 in Figur 1, einen Wischerarm wie die Wischerarme 135, 140 aus Figur 1 und ein Wischerblatt (ohne Bezugszeichen).

In Figur 2a sind ein rechter Scheibenwischer 210 und ein linker Scheibenwischer 215 gegenläufig angeordnet. D.h. wenn der linke Scheibenwischer 210 gegen den Uhrzeigersinn bewegt wird, so wird der rechte Scheibenwischer 215 im Uhrzeigersinn bewegt und umgekehrt. In einer dargestellten Ruheposition ist derjenige Scheibenwischer 210, 215, der einer Fahrerseite des Kraftfahrzeugs 105 zugeordnet ist, so mit dem Scheibenwischer 215, 210, der einer Beifahrerseite des Kraftfahrzeugs 105 zugewiesen ist, verschränkt, dass der fahrerseitige Scheibenwischer 210, 215 auch dann bewegt werden kann, wenn der beifahrerseitige Scheibenwischer 215, 210 in seiner Ruheposition verharrt. Dabei ist der fahrerseitige Scheibenwischer 210, 215 der ersten Antriebssteuerung 115 zugewiesen, die als Master konfiguriert ist, so dass ein Betrieb des fahrerseitigen Scheibenwischers 210, 215 nicht von einer Funktionsfähigkeit der als Slave konfigurierten Antriebssteuerung 115, 120 oder des ihr zugeordneten Scheibenwischers 215, 210 abhängig ist. Je nachdem, ob das Kraftfahrzeug 105 rechts oder links gesteuert ist, ist der linke Scheibenwischer 210 oder der rechte Scheibenwischer 215 mit der als Master konfigurierten ersten Antriebssteuerung 115 verbunden. Parkpositionen für jeden Scheibenwischer 210, 215 sind so gewählt, dass eine Sicht durch die Windschutzscheibe 205 für einen Insassen des Kraftfahrzeugs 105 möglichst wenig behindert wird und gleichzeitig eine Bewegung des jeweils anderen Scheibenwischers 210, 215 kollisionsfrei möglich ist. Dies ist für jeden Scheibenwischer 210, 215 an beiden Enden seiner Schwenkbewegung der Fall.

In Figur 2b umfasst die Scheibenwischer-Anordnung 200 einen linken Scheibenwischer 220 und einen rechten Scheibenwischer 225, die sich in der Lage ihrer Drehachsen und ihrer Ruhepositionen von den Scheibenwischern 210 und 215 aus Figur 2a unterscheiden. Die Scheibenwischer 220 und 225 sind gleichlaufend, d.h. sie bewegen sich im Wesentlichen synchron zueinander bezüglich ihrer Drehrichtung im oder gegen den Uhrzeigersinn. Durch die Lage des linken Scheibenwischers 220 ist dessen Zuordnung zu einer Fahrerseite des Kraftfahrzeugs 105 bereits festgelegt, da die durch den linken Scheibenwischer 220 auf der Windschutzscheibe 205 überstrichene Fläche einem optimalen Sichtfenster für einen Fahrer des Kraftfahrzeugs 105 entspricht. Eine nicht überstrichene erste Restfläche der Windschutzscheibe 205 liegt im Bereich der Mitte der Windschutzscheibe. Der rechte Scheibenwischer 225 befindet sich auf einer Beifahrerseite des Kraftfahrzeugs 105, wobei eine nicht überstrichene zweite Restfläche der Windschutzscheibe 205 in deren rechter oberer Ecke für einen Beifahrer weniger problematisch ist. Der linke Scheibenwischer 220 ist der ersten Antriebsteuerung 115 in Figur 1 zugeordnet, die als Master konfiguriert ist. Parkpositionen ergeben sich auch hier wie oben mit Bezug auf Figur 2b beschrieben.

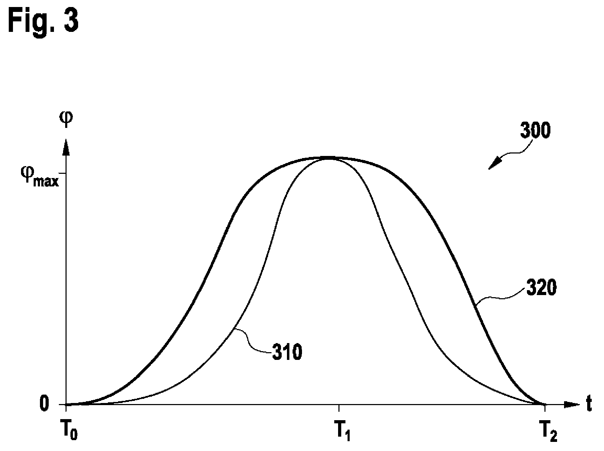

Figur 3 zeigt ein Kennlinien-Diagramm 300 für Antriebe 125 und 130 des Steuersystems 100 aus Figur 1. In einer horizontalen Richtung ist eine Zeit und in einer vertikalen Richtung ein Drehwinkel φ der Scheibenwischer 210, 215 der Scheibenwischer-Anordnung 200 in Figur 2a bzw. der Wischerarme 135 und 140 des Steuersystems 100 in Figur 1 angetragen. Die Drehwinkel beziehen sich auf Auslenkungen aus Ruhepositionen und sind als Beträge angegeben. Eine erste Wischkennlinie 310 korrespondiert zum linken Scheibenwischer 210 in Figur 2a, der mittels des ersten Antriebs 125 von der ersten Antriebssteuerung 115 gesteuert wird, die als Master konfiguriert ist. Eine zweite Wischkennlinie 320 korrespondiert zum rechten Scheibenwischer 215, der mittels des zweiten Antriebs 130 von der zweiten Antriebssteuerung 120 gesteuert wird, die als Slave konfiguriert ist.

Zu einem Zeitpunkt T₀ sind die Drehwinkel φ beider Wischkennlinien 310 und 320 ebenfalls 0. In einem Bereich zwischen T₀ und T₁ steigt der Drehwinkel φ der zweiten Wischkennlinie 320 zunächst rascher als der der ersten Wischkennlinie 310 an, bis zum Zeitpunkt T₁ beide Wischkennlinien 310 und 320 den maximalen Drehwinkel φₘₐₓ erreichen. Zwischen T₁ und T₂ laufen die beiden Wischkennlinien 310 und 320 in entsprechender Weise wieder auf 0 zurück, d.h. die erste Wischkennlinie 310 fällt zuerst ab, bevor die zweite Wischkennlinie 320 abfällt.

Der nicht übereinstimmende Verlauf zwischen der ersten Wischkennlinie 310 und der zweiten Wischkennlinie 320 rührt daher, dass der linke Scheibenwischer 210 in Figur 2a zuerst um einen gewissen Betrag ausgelenkt werden muss, bevor der rechte Scheibenwischer 215 ausgelenkt werden kann, ohne mit dem linken Scheibenwischer 210 zu kollidieren. Die Scheibenwischer 210 und 215 haben ihre maximale Auslenkung φₘₐₓ erreicht, wenn der linke Scheibenwischer 210 maximal gegen den Uhrzeigersinn und der rechte Scheibenwischer 215 maximal im Uhrzeigersinn ausgelenkt ist. Von dort aus verläuft eine Rücklaufbewegung der Scheibenwischer 210 und 215 entsprechend, d.h., der rechte Scheibenwischer 215 eilt in seinem Drehwinkel dem linken Scheibenwischer 210 voraus, um eine kollisionsfreie Bewegung zu ermöglichen.

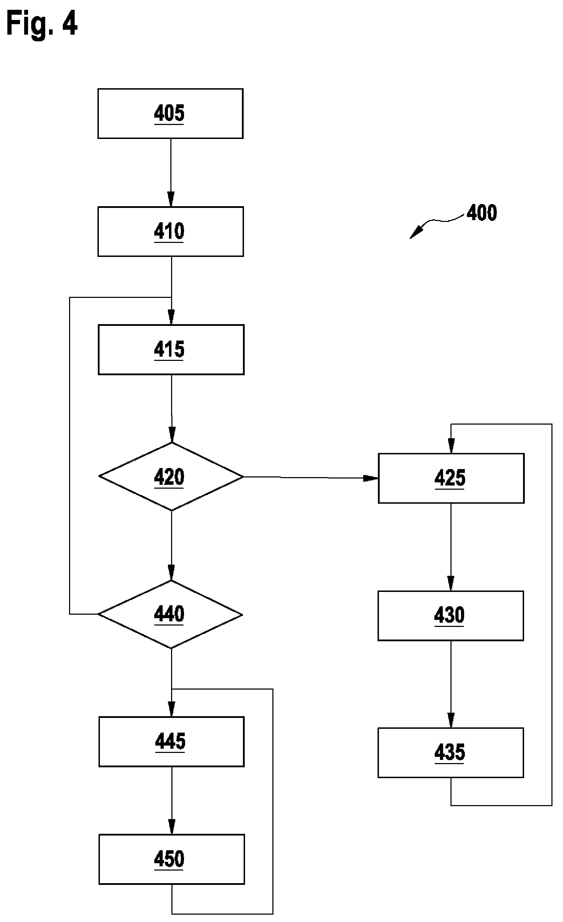

Figur 4 zeigt ein Verfahren 400 zur Steuerung der Antriebe 125 bzw. 130 zur Ausführung auf der ersten Antriebssteuerung 115 bzw. der zweiten Antriebssteuerung 120 aus Figur 1. Das Verfahren 400 umfasst die Schritte 405 bis 450.

Im Schritt 405 befindet sich das Verfahren 400 im Startzustand. Im Schritt 410 wird ein Zeitgeber gestartet, um ein Verstreichen einer vorbestimmten Zeitdauer zu überwachen. Danach werden im Schritt 415 Steuerinformationen über die erste Schnittstelle 145 bzw. 155 empfangen. Anschließend wird im Schritt 420 überprüft, ob tatsächlich Steuerinformationen vorliegen. Ist das der Fall, werden im folgenden Schritt 425 weitere Steuerinformationen über die zweite Schnittstelle 150 bzw. 160 ausgegeben. Im Schritt 430 wird derjenige Antrieb 125, 130, der der Antriebssteuerung zugeordnet ist, auf der das Verfahren 400 abläuft, entsprechend der Steuerinformationen, die über die erste Schnittstelle 145 bzw. 155 empfangen wurden, gesteuert. Sodann werden im Schritt 435 weitere Steuerinformationen über die erste Schnittstelle 145 bzw. 155 empfangen und das Verfahren kehrt zurück zum Schritt 425.

Wurde im Schritt 420 jedoch bestimmt, dass keine Steuerinformationen vorliegen, so wird im Schritt 440 überprüft, ob der Zeitgeber inzwischen abgelaufen ist. Ist dies nicht der Fall, fährt das Verfahren mit dem Schritt 415 fort und empfängt weitere Steuerinformationen. Andernfalls werden im Schritt 445 Steuerinformationen über die zweite Schnittstelle 150 bzw. 160 empfangen. Der Antrieb 125, 130, der der Antriebssteuerung 115, 120 zugeordnet ist, auf der das Verfahren 400 abläuft, wird anschließend im Schritt 450 entsprechend der über die zweite Schnittstelle 150 bzw. 160 empfangenen Steuerinformationen gesteuert. Danach kehrt das Verfahren 400 zurück zum Schritt 445.

Die erste dargestellte Endlosschleife über die Schritte 425, 430 und 435 entspricht einer Konfiguration einer Antriebssteuerung 115 bzw. 120 als Master, während die zweite dargestellte Endlosschleife über die Schritte 445 und 450 einer Konfiguration als Slave entsprechen.

Andere Abläufe sind ebenfalls möglich, insbesondere solche, die ein Ausbrechen aus den Endlosschleifen im Rahmen einer Rekonfiguration erlauben. Hierzu werden innerhalb der Schleifen Schritte des Empfangens von Daten über die erste Schnittstelle und des Überprüfens empfangener Steuerinformationen analog den Schritten 410 - 440 durchlaufen. Zusätzliche Verfahrensschritte sind beispielsweise etwa im Rahmen einer Kollisionsauflösung, eines Not-Ablaufs bei Versagen von einzelnen Komponenten des Scheibenwischersystems oder eines Verfahrens in einen Parkzustand möglich.

## Patentansprüche

1. Steuersystem (100), für zwei Scheibenwischer eines Kraftfahrzeugs (105), mit:
- einer ersten Antriebssteuerung (115) mit einer ersten (145) und einer zweiten Schnittstelle (150);
- einen der ersten Antriebssteuerung (115) zugeordneten ersten Antrieb (125);
- einer zweiten Antriebssteuerung (120) mit einer ersten (155) und einer zweiten Schnittstelle (160); und
- einen der zweiten Antriebssteuerung (120) zugeordneten zweiten Antrieb (130);
- wobei
- die zweiten Schnittstellen (150, 160) beider Antriebssteuerungen (115, 120) miteinander verbunden sind;
- die erste Schnittstelle (145) der ersten Antriebssteuerung (115) mit einem Steuermodul (110) verbunden ist;
- die erste Schnittstelle (155) der zweiten Antriebssteuerung (120) mit keinem Kommunikationspartner verbunden ist;
- beide Antriebssteuerungen (115, 120) dazu eingerichtet sind, sich nach Empfangen von Steuerinformationen über die erste Schnittstelle (145, 155) in einer Master-Rolle zu konfigurieren und Steuerinformationen über die zweite Schnittstelle (150, 160) auszugeben, um die jeweils andere Antriebssteuerung (120, 115) zu steuern; und
- jede der Antriebssteuerungen (115, 120) dazu eingerichtet ist, sich in einer Slave-Rolle zu konfigurieren und mittels Steuerinformationen über die zweite Schnittstelle (150, 160) gesteuert zu werden, nachdem über eine vorbestimmte Zeitdauer keine Steuerinformationen über die jeweils erste Schnittstelle (145, 155) empfangen wurden

2. Steuersystem (100) nach Anspruch 1, **dadurch gekennzeichnet, dass** die als Master konfigurierte Antriebssteuerung (115) dazu eingerichtet ist, über die zweite Schnittstelle (150) Steuerinformationen auszusenden, die eine Sollstellung eines mit der anderen Antriebssteuerung (120) verbundenen Antriebs (130) umfassen und Steuerinformationen zu empfangen, die eine Iststellung des Antriebs (130) umfassen.

3. Steuersystem (100) nach einem der vorangehenden Ansprüche, **dadurch gekennzeichnet, dass** die Antriebssteuerungen (115, 120) dazu eingerichtet sind, den jeweils zugeordneten Antrieb (125, 130) in einer Konfiguration in der Master-Rolle anhand einer ersten gespeicherten Kennlinie (310, 320) zu steuern und in einer Konfiguration in der Slave-Rolle anhand einer zweiten gespeicherten Kennlinie (310, 320) zu steuern.

4. Steuersystem (100) nach einem der vorangehenden Ansprüche, **dadurch gekennzeichnet, dass** die Antriebssteuerungen (115, 120) dazu eingerichtet sind, sich nach einem Empfangen von Steuerinformationen sowohl über die erste (145, 155) als auch über die zweite Schnittstelle (150, 160) in einer Slave-Rolle zu konfigurieren und den jeweils zugeordneten Antrieb (125, 130) entsprechend über die zweite Schnittstelle (150, 160) empfangener Steuerinformationen zu steuern.

5. Steuersystem (100) nach einem der vorangehenden Ansprüche, **dadurch gekennzeichnet, dass** die Antriebssteuerungen (115, 120) dazu eingerichtet sind, den zugeordneten Antrieb (125, 130) in eine Parkposition zu verbringen, nachdem über eine vorbestimmte Zeitdauer Steuerinformationen weder über die erste Schnittstelle (145, 155) noch über die zweite Schnittstelle (150, 160) empfangen wurden.

6. Steuersystem nach einem der vorangehenden Ansprüche, **dadurch gekennzeichnet, dass** der erste und der zweite Antrieb (125, 130) gegenläufig ausgelegt sind.

7. Verfahren zur Steuerung eines ersten Antriebs (125), dem eine erste Antriebssteuerung (115) zugeordnet ist, und eines zweiten Antriebs (130), dem eine zweite Antriebssteuerung (120) zugeordnet ist, wobei das Verfahren folgende Schritte aufweist:
- Empfangen (415) von Steuerinformationen über eine erste Schnittstelle (145) der ersten Antriebssteuerung (115);
- Konfigurieren der ersten Antriebssteuerung (115) in einer Master-Rolle;
- Konfigurieren der zweiten Antriebssteuerung (115) in einer Slave-Rolle, nachdem sie über ihre erste Schnittstelle (155) länger als eine vorbestimmte Zeitdauer keine Steuerinformationen empfangen hat;
- Ausgeben (425) von Steuerinformationen über eine zweite Schnittstelle (150) der ersten Antriebssteuerung (115) an die zweite Antriebssteuerung (120);
- Steuern (430) des ersten Antriebs (125) durch die erste Antriebssteuerung (115); und
- Steuern (450) des zweiten Antriebs (130) durch die zweite Antriebssteuerung (120);

## Claims

1. Control system (100) for two windscreen wipers of a motor vehicle (105), having:
- a first drive controller (115) with a first interface (145) and a second interface (150);
- a first drive (125) assigned to the first drive controller (115);
- a second drive controller (120) with a first interface (155) and a second interface (160); and
- a second drive (130) assigned to the second drive controller (120);
- wherein
- the second interfaces (150, 160) of the two drive controllers (115, 120) are connected to one another;
- the first interface (145) of the first drive controller (115) is connected to a control module (110);
- the first interface (155) of the second drive controller (120) is not connected to a communication partner;
- both drive controllers (115, 120) are set up to configure themselves in a master role after receiving control information via the first interface (145, 155) and to output control information via the second interface (150, 160) in order to control the respective other drive controller (120, 115); and
- each of the drive controllers (115, 120) is set up to configure itself in a slave role and to be controlled by means of control information via the second interface (150, 160) after no control information has been received via the respective first interface (145, 155) over a predetermined period.

2. Control system (100) according to Claim 1, **characterized in that** the drive controller (115) configured as the master is set up to emit control information via the second interface (150), said control information comprising a desired position of a drive (130) connected to the other drive controller (120), and to receive control information comprising an actual position of the drive (130).

3. Control system (100) according to one of the preceding claims, **characterized in that** the drive controllers (115, 120) are set up to control the respectively assigned drive (125, 130) in a configuration in the master role using a first stored characteristic curve (310, 320) and to control said drive in a configuration in the slave role using a second stored characteristic curve (310, 320).

4. Control system (100) according to one of the preceding claims, **characterized in that** the drive controllers (115, 120) are set up to configure themselves in a slave role after receiving control information both via the first interface (145, 155) and via the second interface (150, 160) and to control the respectively assigned drive (125, 130) according to control information received via the second interface (150, 160).

5. Control system (100) according to one of the preceding claims, **characterized in that** the drive controllers (115, 120) are set up to change the assigned drive (125, 130) to a parked position after control information has not been received either via the first interface (145, 155) or via the second interface (150, 160) over a predetermined period.

6. Control system according to one of the preceding claims, **characterized in that** the first and second drives (125, 130) are designed to work in opposite directions.

7. Method for controlling a first drive (125), to which a first drive controller (115) is assigned, and a second drive (130), to which a second drive controller (120) is assigned,
wherein the method has the following steps of:
- receiving (415) control information via a first interface (145) of the first drive controller (115);
- configuring the first drive controller (115) in a master role;
- configuring the second drive controller (115) in a slave role after it has not received any control information via its first interface (155) for longer than a predetermined period;
- outputting (425) control information to the second drive controller (120) via a second interface (150) of the first drive controller (115);
- controlling (430) the first drive (125) by means of the first drive controller (115); and
- controlling (450) the second drive (130) by means of the second drive controller (120).

## Revendications

1. Système de commande (100) pour deux essuieglaces d'un véhicule automobile (105), comprenant :
- une première commande d'entraînement (115) dotée d'une première (145) et d'une deuxième interface (150) ;
- un premier mécanisme d'entraînement (125) associé à la première commande d'entraînement (115) ;
- une deuxième commande d'entraînement (120) dotée d'une première (155) et d'une deuxième interface (160) ;
- un deuxième mécanisme d'entraînement (130) associé à la deuxième commande d'entraînement (120) ;
- système avec lequel
- les deuxièmes interfaces (150, 160) des deux commandes d'entraînement (115, 120) sont reliées l'une à l'autre ;
- la première interface (145) de la première commande d'entraînement (115) est reliée à un module de commande (110) ;
- la première interface (155) de la deuxième commande d'entraînement (120) n'est reliée à aucun partenaire de communication ;
- les deux commandes d'entraînement (115, 120) sont conçues pour, après la réception d'informations de commande par le biais de la première interface (145, 155), se configurer dans un rôle de maître et délivrer des informations de commande par le biais de la deuxième interface (150, 160) afin de commander respectivement l'autre commande d'entraînement (120, 115) ; et
- chacune des commandes d'entraînement (115, 120) est conçue pour se configurer dans un rôle d'esclave et être commandée par le biais de la deuxième interface (150, 160) après une durée prédéfinie pendant laquelle aucune information n'a été reçue par le biais de la première interface (145, 155) respective.

2. Système de commande (100) selon la revendication 1, **caractérisé en ce que** la commande d'entraînement (115) configurée en tant que maître est conçue pour émettre des informations de commande par le biais de la deuxième interface (150), lesquelles comprennent une position de consigne d'un mécanisme d'entraînement (130) relié à l'autre commande d'entraînement (120), et pour recevoir des informations de commande qui comprennent une position réelle du mécanisme d'entraînement (130).

3. Système de commande (100) selon l'une des revendications précédentes, **caractérisé en ce que** les commandes d'entraînement (115, 120) sont, conçues pour commander le mécanisme d'entraînement (125, 130) respectivement associé, dans une configuration dans le rôle de maître à l'aide d'une première courbe caractéristique (310, 320) enregistrée et, dans une configuration dans le rôle d'esclave, à l'aide d'une deuxième courbe caractéristique (310, 320) enregistrée.

4. Système de commande (100) selon l'une des revendications précédentes, **caractérisé en ce que** les commandes d'entraînement (115, 120) sont conçues pour, après une réception d'informations de commande aussi bien par le biais de la première (145, 155) que par le biais de la deuxième interface (150, 160), se configurer dans un rôle d'esclave et commander le mécanisme d'entraînement (125, 130) respectivement associé conformément aux informations de commande reçues par le biais de la deuxième interface (150, 160).

5. Système de commande (100) selon l'une des revendications précédentes, **caractérisé en ce que** les commandes d'entraînement (115, 120) sont conçues pour amener le mécanisme d'entraînement (125, 130) associé dans une position de stationnement après une durée prédéfinie pendant laquelle aucune information de commande n'a été reçue par le biais de la première interface (145, 155), ni par le biais de la deuxième interface (150, 160).

6. Système de commande selon l'une des revendications précédentes, **caractérisé en ce que** le premier et le deuxième mécanisme d'entraînement (125, 130) sont conçus pour tourner à contresens.

7. Procédé de commande d'un premier mécanisme d'entraînement (125) auquel est associé une première commande d'entraînement (115), et un deuxième mécanisme d'entraînement (130) auquel est associée une deuxième commande d'entraînement (120), le procédé comprenant les étapes suivantes :
- réception (415) d'informations de commande par le biais d'une première interface (145) de la première commande d'entraînement (115) ;
- configuration de la première commande d'entraînement (115) dans un rôle de maître ;
- configuration de la deuxième commande d'entraînement (120) dans un rôle d'esclave après dépassement d'une durée prédéfinie pendant laquelle elle n'a reçu aucune information par le biais de sa première interface (155) ;
- délivrance (425) d'informations de commande par le biais d'une deuxième interface (150) de la première commande d'entraînement (115) à la deuxième commande d'entraînement (120) ;
- commande (430) du premier mécanisme d'entraînement (125) par la première commande d'entraînement (115) ; et
- commande (450) du deuxième mécanisme d'entraînement (130) par la deuxième commande d'entraînement (120).
